# EUROPEAN PATENT SPECIFICATION

(11) **EP 0 471 766 B1**
(45) Date of publication and mention of the grant of the patent: **25.01.1995**
(21) Application number: 90908057.4
(22) Date of filing: 27.04.1990
(51) Int. Cl.: C08F 6/24, C08F 6/16, C08F 6/10

(54) **A PROCESS FOR MINIMIZING RESIDUAL FREE HYDRAZINE IN POLYMER LATICES**
VERFAHREN ZUR MINIMALEN REDUKTION DES FREIEN HYDRAZINS IN POLYMERLATEXEN
PROCEDE POUR REDUIRE AU MINIMUM LES RESIDUS D'HYDRAZINE LIBRE DANS DES LATEX POLYMERES

(30) Priority: 11.05.1989 US 350653; 16.05.1989 US 352782
(43) Date of publication of application: 26.02.1992
(73) Proprietor: OLIN CORPORATION, Cheshire, CT 06410-0586 (US)
(72) Inventor: SCHIESSL, Henry, W., Northford, CT 06472 (US); MANKE, Steven, A., Wallingford, CT 06492 (US)
(74) Representative: Baker, Colin John
(86) International application number: US9002253
(87) International publication number: WO9013578

(56) References cited:
- US-A- 4 317 741
- US-A- 4 452 950
- US-A- 4 532 318

## Description

Various forms of hydrogenated nitrile rubbers have recently been introduced into the marketplace. Hydrogenated nitrile rubber has the advantage of being resistant to oxidation degradation at high temperature, as well as being resistant to corrosive environments such as acid environments. These materials have found utility in the manufacture of fan belts, seals, gaskets, and hoses in increasingly small and hot-running car engines.

One process for the production of hydrogenated polymers in latex form, particularly hydrogenated latex rubber, utilizes hydrazine and an unsaturated polymer as the starting materials. This process is more particularly described in U.S. Patent No. 4,452,950, assigned to the Goodyear Tire and Rubber Company. However, the product produced in accordance with the process described in the '950 patent suffers from the disadvantage of containing residual unreacted hydrazine. This residual hydrazine is considered undesirable from an environmental and/or toxicity standpoint.

In view of the above, it would be highly desirable to provide a process for the elimination and/or reduction of the residual hydrazine in the polymer product mixture.

It is known from US-A-4 532 318 that trace amounts of hydrazine may be removed from pharmaceutical grade poly (N-vinyl-2-pyrrolidinone) (PVP) by contacting an aqueous solution of the PVP with a gaseous stream containing ozone, at atmospheric pressure and ambient temperature.

In one aspect, the present invention relates to a process for reducing or eliminating hydrazine from a mixture of hydrazine and polymer, wherein said polymer is in latex form, which comprises contacting said hydrazine in said mixture with an oxygen-containing gas which is air or oxygen, or a combination thereof, at an elevated pressure of between 138 x 10³Pa (20 psig) and 4826 x 10³Pa (700 psig) and a temperature of between 20°C and 100°C, preferably between 20°C and 50°C, in the presence of a hydroquinone catalyst in order to effect a reaction of said hydrazine with said oxygen-containing gas in order to produce a purified mixture containing a reduced amount of hydrazine.

In another aspect, the present invention relates to a two-step process for reducing or eliminating hydrazine from a mixture of hydrazine and polymer, said polymer being in latex form, which comprises:
(a) contacting said hydrazine in said mixture with an oxygen-containing gas which is air or oxygen, or a combination thereof, at an elevated pressure of between 138 x 10³Pa (20 psig) and 4826 x 10³Pa (700 psig) and a temperature of between 20°C and 100°C in the presence of a quinone or hydroquinone catalyst in order to effect a reaction of said hydrazine with said oxygen-containing gas in order to produce a purified mixture containing a reduced amount of free hydrazine, and
(b) contacting said free hydrazine in said purified mixture with a hydrazine scavenger selected from isocyanates, alkylene oxides, acrylates, methacrylates, acrylic acids, acrylonitrile, methacrylic acids, ketones, diketones, aldehydes, and combinations thereof in order to bind at least a portion of said free hydrazine, thereby providing a desired mixture containing a reduced amount of free hydrazine.

These and other aspects of the present invention will become apparent upon a reading of the following detailed description of the invention.

The catalyst useful in the present invention is a quinone or hydroquinone catalyst. The catalyst is used in a "catalytically-effective amount", i.e. an amount sufficient to catalyze the destruction of at least some of the hydrazine in the polymer/hydrazine mixture by virtue of catalysis of a hydrazine reaction with the oxygen in the oxygen-containing gas. Although the preferred hydroquinone catalyst is quinone or hydroquinone itself, derivatives of hydroquinone can be used such as alkyl (preferably lower alkyl), carboxylic acid, or sulfonyl-substituted derivatives of quinone or hydroquinone. The catalyst is employed in a catalytically-effective amount, preferably between 0.1 and 1 percent based upon the total weight of latex.

The oxygen-containing gas employed in accordance with the process of the present invention reacts with hydrazine to produce water and nitrogen. The oxygen-containing is preferably air or oxygen, most preferably oxygen. The oxygen-containing gas is suitably employed in an amount of between 100 to 300 percent excess, based on the total amount of hydrazine to be reacted.

The polymer/hydrazine mixture generally contains a major amount (i.e. typically greater than 70 weight percent) of water, saturated polymer (typically about 5 to about 25 weight percent), a minor amount of unsaturated polymer (typically between about one and five weight percent), and a minor amount (typically between about 0.1 and about 3 weight percent) of hydrazine, wherein the weight percents are based upon the total weight of the latex. For most applications, it is preferred that the amount of unsaturated polymer in the latex and the amount of hydrazine be minimized in the mixture. Reduction or elimination of the unsaturated polymer by conversion to saturated polymer is helpful in reducing the reactivity of the polymer latex. Reduction or elimination of the hydrazine in the mixture provides a mixture having reduced toxicity. The process of the present invention provides multiple advantages by both (a) reducing the amount of hydrazine in the mixture and (b) converting at least some of the unsaturated polymer to saturated polymer.

The hydrazine scavenger useful in the process of the present invention acts to bind at least some portion of the free hydrazine in the purified latex. Useful hydrazine scavengers are compounds that react with hydrazine and include the following classes of compounds: isocyanates (such as tolylene diisocyanate, phenyl isocyanate and methylene diphenyl isocyanate (MCI)); alkylene oxides (such as ethylene oxide, propylene oxide, isobutylene oxide, styrene oxide, and polymeric epoxides); acrylates and methacrylates (such as methyl methacrylate); acrylonitrile, acrylic acids and methacrylic acids; ketones and diketones (such as acetyl acetone); aldehydes (such as benzaldehyde); and combinations thereof. The preferred hydrazine scavenger is propylene oxide.

The hydrazine scavenger is employed in a "scavenging effective amount". As used herein, the term "scavenging effective amount" designates an amount of hydrazine scavenger sufficient to react with and bind at least some amount of the free hydrazine in the latex mixture. Preferably, the hydrazine scavenger is employed in an amount of between 1 and 10, more preferably between 1 and 5 times the theoretical molar amount required to react with the free hydrazine present in the hydrazine/latex mixture.

In a preferred embodiment of the two-step process of the present invention, step (a) of the two-step process is utilized to reduce the amount of hydrazine in the polymer/hydrazine mixture to a level of 100 ppm or less, and then step (b) is employed to reduce the amount of free hydrazine in the mixture to 25 ppm or less.

The polymer/hydrazine mixture in latex form is prepared by hydrogenation of unsaturated polymers. Prior to hydrogenation, the unsaturated polymers are typically composed of 5 to 100 percent by weight of a conjugated diene monomer unit and 95 to 0 percent by weight of an ethylenically-unsaturated monomer unit. Specific examples of the conjugated diene monomer are 1,3-butadiene, 2,3-dimethylbutadiene, isoprene, and 1,3-pentadiene, specific examples of the ethylenically unsaturated monomer include unsaturated nitriles such as acrylonitrile and methacrylonitrile, monovinyl aromatic hydrocarbons such as styrene, (o-, m-, and p-) alkylstyrenes, divinyl aromatic such as divinylbenzene, dialkenyl aromatics such as diisopropenylbenzene, unsaturated carboxylic acids and the esters thereof such as acrylic acid, methacrylic acid, crotonic acid, itaconic acid, maleic acid, methyl acrylate, ethyl acrylate, butyl acrylate, 2-ethylhexyl acrylate and methyl methacrylate; vinylpyridine; and vinyl esters such as vinyl acetate.

The conjugated diene polymer may be one prepared by any method of preparation, such as emulsion polymerization, solution polymerization or bulk polymerization. Specific examples of the conjugated diene polymer include polyisoprene, polybutadiene, a styrene/butadiene (random or block) copolymer, an acrylonitrile/butadiene (random or blocked) copolymer, a butadiene/isoprene copolymer, and an isoprene/isobutylene copolymer.

When employing the processes of the present invention utilizing air, oxygen, or a combination thereof, to remove hydrazine from the latex mixture, this step is suitably effected at an elevated pressure of between 138 x 10³Pa (20 psig) and 4826 x 10³Pa (700 psig), more preferably between 207 x 10³Pa (30 psig) and 1379 x 10³Pa (200 psig), most preferably between 207 x 10³Pa (30 psig) and 689 x 10³Pa (100psig). The process is effected at a temperature of between 20°C and 100°C, more preferably between 20°C and 50°C. The reaction time for the process of the present invention can vary over a wide range, but is preferably between 1 hour and 50 hours, more preferably between 1 hour and 25 hours, most preferably between 1 hour and 20 hours.

The following examples are intended to illustrate, but in no way limit the scope of, the present invention.

### EXAMPLE 1

An acrylonitrile/butadiene rubber with 66.2 weight percent butadiene and an average molecular weight of about 200,000 was hydrogenated in latex form with a mixture of hydrazine and hydrogen peroxide in a manner approximately as described in Wideman, without a metal ion initiator. After achieving about 91 percent conversion of the C=C double bonds, the run was interrupted. At this point in the reaction, the latex contained 3.76 weight percent unreacted hydrazine based on the weight of the aqueous phase of the latex. This latex was placed in a pressure vessel, along with ca 0.2 weight percent hydroquinone as catalyst, the vessel flushed with pure oxygen several times and then pressured with pure oxygen to 276 x 10³Pa (40 psig) and allowed to react at the autogenous temperature, which generally was between 20°C and 50°C. This operation of flushing and filling the pressure reactor was repeated several times in order to provide sufficient oxygen for the reaction with hydrazine. The final hydrazine concentration after this oxygen treatment was about 100 ppm, based on the total weight of latex. The total time of treatment was about 20 hours under pressure.

### Comparative Example A

A latex hydrogenated as described in Example 1 and hydroquinone as catalyst, were charged to a reaction flask and reacted with oxygen by bubbling the oxygen gas through the latex at atmospheric pressure at an autogenous temperature of about 20°C to 45°C until a large excess of oxygen had been introduced. The original concentration of hydrazine before the oxygen treatment was 3.2 percent and the level after was still 2833 ppm, based on the total weight of latex. This indicates that it is highly desirable to carry this operation out under pressure.

### Comparative Example B

A partially hydrogenated latex was prepared as described in Example 1. When the hydrogenation step was interrupted, the latex contained about 2.4 percent hydrazine, based on the total weight of the latex. This was then subjected to a pressurized oxygen treatment as described in Example 1, except that no hydroquinone catalyst was employed. After 6.5 hours of reaction, the latex contained 2.3 percent hydrazine, indicating essentially no reaction. The run was then interrupted in order to add a catalytic amount of hydroquinone and the pressurized oxygen reaction continued for another 6.5 hours, after which the hydrazine level had been reduced to about 150 ppm. This indicates the necessity for carrying out this reaction in the presence of a catalyst such as hydroquinone.

### EXAMPLE 2

U.S. Patent No. 4,079,018 teaches the use of a metal complex as a catalyst for the reaction of hydrazine with oxygen. Such a complex is, for example, a cobalt-EDTA complex. When air was passed through a 34.9 percent aqueous solution of hydrazine containing this catalyst, the hydrazine level changed to 33.64 percent over a period of 2 hours. This experiment was then interrupted in order to add, as a second catalyst, a small portion of hydroquinone. Air was then bubbled through the solution at about 50°C for a period of about 7 hours, during which the hydrazine level dropped only to 32.73 percent. This indicates the desirability of using pure oxygen instead of air in order to carry out this reaction in any reasonable time under these mild conditions.

### EXAMPLE 3

An acrylonitrile/butadiene rubber with 66.2 weight percent butadiene and an average molecular weight of about 200,000 was hydrogenated in latex form with a mixture of hydrazine and hydrogen peroxide in a manner approximately as described in Wideman, without a metal ion initiator. After achieving about 91 percent conversion of the C=C double bonds, the run was interrupted. At this point in the reaction, the latex contained 3.76 weight percent unreacted hydrazine, based on the weight of the aqueous phase of the latex. This latex was placed in a pressure vessel, along with ca 0.2 weight percent hydroquinone as catalyst, the vessel flushed with pure oxygen several times and then pressured with pure oxygen to 276 x 10³Pa (40 psig) and allowed to react at the autogenous temperature, which generally was between 20 and 40°C. This operation of flushing and filling the pressure reactor was repeated several times in order to provide sufficient oxygen for the reaction with hydrazine. The final hydrazine concentration after this oxygen treatment was about 100 ppm, based on the total weight of latex. The total time of treatment was about 20 hours under pressure.

To a portion of the above latex, a molar excess of toluene diisocyanate (TDI) (relative to the hydrazine present) was added at room temperature and stirred for two hours. The final free hydrazine content was about 50 ppm, based on the total weight of the latex.

### EXAMPLE 4

To another portion of the hydrogenated latex as prepared in Example 3, an excess of propylene oxide was added at room temperature and stirred for two hours. Again the final free hydrazine content was about 50 ppm, based on the total weight of the latex.

### EXAMPLE 5

A latex sample was prepared substantially as per Example 3, up to and including the pressurized oxygen step. The conversion of the C=C bonds was about 90 percent complete at the end of the reaction and the hydrazine level in the aqueous phase of the latex was treated with an excess of propylene oxide, stirred for one hour at room temperature and then for an additional hour at 80-85°C. The final level of free hydrazine in the aqueous phase of the latex was 17 ppm hydrazine.

### EXAMPLE 6

An acrylonitrile/butadiene rubber with 66.2 weight percent butadiene and an average molecular weight of about 200,000 was hydrogenated in latex form with a mixture of hydrazine and hydrogen peroxide in a manner approximately as described in Wideman, without a metal ion initiator. After achieving about 88 percent conversion of the C=C double bonds, the run was interrupted. At this point in the reaction, the latex contained 4.05 weight percent unreacted hydrazine, based on the weight of the aqueous phase of the latex.

To a portion of this hydrogenated latex was added an excess of methyl acrylate and stirred at room temperature for 1.5 hours. During this period, there was a noticeable exotherm. The final hydrazine content was about 4.73 ppm, based on the weight of the aqueous phase of the latex, which represents about a 99 percent removal of hydrazine from the latex.

The above Examples and Comparative Examples demonstrate the desirability of removing residual hydrazine from a hydrogenated rubber latex by reacting the latex under mild thermal conditions in a process that involves all of the following: a catalyst, essentially pure oxygen or air enriched in oxygen, and elevated pressures.

## Claims

1. A process for reducing or eliminating hydrazine from a mixture of hydrazine and polymer, wherein said polymer is in latex form, characterized by contacting said hydrazine in said mixture with an oxygen-containing gas which is air or oxygen, or a combination thereof, at an elevated pressure of between 138 x 10³ Pa (20 psig) and 4826 x 10³ Pa (700 psig) and a temperature of between 20°C and 100°C in the presence of a quinone or hydroquinone catalyst in order to effect a reaction of said hydrazine with said oxygen-containing gas in order to produce a purified mixture containing a reduced amount of hydrazine.

2. A two-step process for reducing or eliminating hydrazine from a mixture of hydrazine and polymer, said polymer being in latex form, characterized by:
(a) contacting said hydrazine in said mixture with an oxygen-containing gas which is air or oxygen, or a combination thereof, at an elevated pressure of between 138 x 10³Pa (20 psig) and 4826 x 10³Pa (700 psig) and a temperature of between 20°C and 100°C in the presence of a quinone or hydroquinone catalyst in order to effect a reaction of said hydrazine with said oxygen-containing gas in order to produce a purified mixture containing a reduced amount of free hydrazine, and
(b) contacting said free hydrazine in said purified mixture with a hydrazine scavenger selected from isocyanates, alkylene oxides, acrylates, methacrylates, acrylic acids, acrylonitrile, methacrylic acids, ketones, diketones, aldehydes, and combinations thereof. in order to bind at least a portion of said free hydrazine, thereby providing a desired mixture containing a reduced amount of free hydrazine therein.

3. The process of claim 2 wherein said hydrazine scavenger is employed in a scavenging effective amount between 1 and 10 times the number of moles of hydrazine present in said mixture.

4. The process of claim 2 or claim 3 wherein the hydrazine scavenger is propylene oxide.

5. The process of any one of the preceding claims wherein said pressure is between 207 x 10³ (30 psig) and 1379 x 10³Pa (200 psig).

6. The process of any one of the preceding claims wherein said pressure is between 207 x 10³ (30 psig) and 689 x 10³ (100 psig).

7. The process of any one of the preceding claims wherein said temperature is between 20°C and 50°C.

8. The process of any one of the preceding claims wherein said reaction is conducted for a reaction time of between 1 hour and 50 hours.

9. A process of claim 8 wherein said reaction is conducted for a reaction time of between 1 hour and 25 hours.

10. The process of claim 9 wherein said reaction is conducted for a reaction time of between 1 hour and 20 hours.

## Patentansprüche

1. Ein Verfahren zur Reduktion oder Beseitigung von Hydrazin in einer Hydrazin-Polymer-Mischung, wobei das Polymer in der Form von Latex vorliegt, gekennzeichnet durch Kontaktbehandlung des Hydrazins in der Mischung mit einem Sauerstoff enthaltenden Gas, wobei es sich um Luft oder Sauerstoff oder eine Kombination beider handelt, unter einem erhöhten Druck zwischen 138 x 10³ Pa (20 psig) und 4826 x 10³ Pa (700 psig) und einer Temperatur zwischen 20 °C und 100 °C in Anwesenheit eines Chinon- oder Hydrochinonkatalysators, um eine Reaktion des Hydrazins mit dem Sauerstoff enthaltenden Gas herbeizuführen, um eine gereinigte Mischung zu erzeugen, die einen verringerten Anteil an Hydrazin enthält.

2. Ein zweistufiges Verfahren zur Reduktion oder Beseitigung von Hydrazin aus einer Hydrazin-Polymer-Mischung, wobei das Polymer in Latexform vorliegt, gekennzeichnet durch:
(a) Kontaktbehandlung des Hydrazins in der Mischung mit einem Sauerstoff enthaltenden Gas, wobei es sich um Luft oder Sauerstoff, oder einer Kombination beider handelt, unter einem erhöhten Druck zwischen 138 x 10³ Pa (20 psig) und 4826 x 10³ Pa (700 psig) und einer Temperatur zwischen 20 °C und 100 °C in Anwesenheit eines Chinon- oder Hydrochinonkatalysators, um eine Reaktion des Hydrazins mit dem Sauerstoff enthaltenden Gas herbeizuführen, um eine gereinigte Mischung zu erzeugen, die einen verringerten Anteil freien Hydrazins enthält und
(b) Kontaktbehandlung des freien Hydrazins in der gereinigten Mischung mit einem Hydrazin-Reinigungsmittel, welches aus der Gruppe der Isocyanate, Alkylenoxide, Akrylate, Methacrylate, Akrylsäuren, Akrylnitrilen, Methacrylsäuren, Ketonen, Diketonen, Aldehyden und Kombinationen von diesen ausgewählt worden ist, um wenigstens ein Teil des freien Hydrazins zu binden, um dadurch eine gewünschte Mischung zu erzeugen, welche einen verringerten Anteil freien Hydrazins enthält.

3. Das Verfahren nach Anspruch 2, in welchem das Hydrazin-Reinigungsmittel in einer reinigungswirksamen Menge zwischen dem 1 bis 10-fachen der Zahl der Mole des in der Mischung vorhandenen Hydrazins eingesetzt wird.

4. Das Verfahren nach Anspruch 2 oder 3, in welchem das Hydrazin-Reinigungsmittel Propylenoxid ist.

5. Das Verfahren nach irgendeinem der vorangehenden Ansprüche, bei welchem der Druck zwischen 207 x 10³ (30 psig) und 1379 x 10³ Pa (200 psig) liegt.

6. Das Verfahren nach irgendeinem der vorangehenden Ansprüche, bei welchem der Druck zwischen 207 x 10³ Pa (30 psig) und 689 x 10³ Pa (100 psig) liegt.

7. Das Verfahren nach irgendeinem der vorangehenden Ansprüche, bei welchem die Temperatur zwischen 20 °C und 50 °C liegt.

8. Das Verfahren nach irgendeinem der vorangehenden Ansprüche, in welchem die Reaktion über eine Reaktionszeit zwischen einer Stunde und 50 Stunden durchgeführt wird.

9. Ein Verfahren nach Anspruch 8, in welchem die Reaktion über eine Reaktionszeit zwischen einer Stunde und 25 Stunden durchgeführt wird.

10. Das Verfahren nach Anspruch 9, in welchem die Reaktion über eine Reaktionszeit zwischen einer Stunde und 20 Stunden durchgeführt wird.

## Revendications

1. Procédé pour réduire ou éliminer l'hydrazine à partir d'un mélange d'hydrazine et de polymère, dans lequel ledit polymère est sous forme de latex, caractérisé en ce que l'on met en contact ladite hydrazine présente dans ledit mélange avec un gaz contenant de l'oxygène qui est l'air ou l'oxygène, ou une association de ceux-ci, sous une pression élevée comprise entre 138 x 10³ Pa (20 psig) et 4826 x 10³ Pa (700 psig) et à une température comprise entre 20°C et 100°C, la présence d'une quinone ou d'hydroquinone comme catalyseur, pour effectuer une réaction entre ladite hydrazine et ledit gaz contenant de l'oxygène pour produire un mélange purifié contenant une quantité réduite d'hydrazine.

2. Procédé en deux stades pour réduire ou éliminer l'hydrazine à partir d'un mélange d'hydrazine et de polymère, ledit polymère étant sous forme de latex, caractérisé en ce que
(a) on met en contact ladite hydrazine présente dans ledit mélange avec un gaz contenant de l'oxygène qui est l'air ou l'oxygène, ou une association de ceux-ci, sous une pression élevée comprise entre 138 x 10³ Pa (20 psig) et 4826 x 10³ Pa (700 psig) et à une température comprise entre 20°C et 100°C, en présence d'une quinone ou d'hydroquinone comme catalyseur, pour effectuer une réaction entre ladite hydrazine et ledit gaz contenant de l'oxygène, pour produire un mélange purifié contenant une quantité réduite d'hydrazine libre, et
(b) on met en contact ladite hydrazine libre présente dans ce mélange purifié avec un fixateur d'hydrazine choisi parmi les isocyanates, les oxydes d'alkylène, les acrylates, les méthacrylates, les acides acryliques, l'acrylonitrile, les acides méthacryliques, les cétones, les dicétones, les aldéhydes et des associations de ceux-ci, pour lier au moins une partie de cette hydrazine libre, fournissant ainsi un mélange désiré contenant une quantité réduite d'hydrazine libre.

3. Procédé selon la revendication 2, dans lequel ledit fixateur d'hydrazine est utilisé dans une quantité efficace comme fixateur comprise entre 1 et 10 fois le nombre de moles d'hydrazine présent dans ce mélange.

4. Procédé selon la revendication 2 ou 3, dans lequel le fixateur d'oxygène est l'oxyde de propylène.

5. Procédé selon l'une quelconque des revendications précédentes, dans lequel ladite pression est comprise entre 207 x 10³ (30 psig) et 1379 x 10³ Pa (200 psig).

6. Procédé selon l'une quelconque des revendications précédentes, dans lequel ladite pression est comprise entre 207 x 10³ (30 psig) et 689 x 10³ (100 psig).

7. Procédé selon l'une quelconque des revendications précédentes, dans lequel ladite température est comprise entre 20°C et 50°C.

8. Procédé selon l'une quelconque des revendications précédentes, dans lequel ladite réaction est effectuée pendant un temps de réaction compris entre 1 heure et 50 heures.

9. Procédé selon la revendication 8, dans lequel ladite réaction est effectuée pendant un temps de réaction compris entre 1 heure et 25 heures.

10. Procédé selon la revendication 9, dans lequel ladite réaction est effectuée pendant un temps de réaction compris entre 1 heure et 20 heures.
